(19) **Europäisches Patentamt / European Patent Office / Office européen des brevets**

(11) **EP 2 824 205 B1**

(12) **EUROPEAN PATENT SPECIFICATION**

(45) Date of publication and mention
of the grant of the patent:
**17.05.2017 Bulletin 2017/20**

(21) Application number: **13757200.4**

(22) Date of filing: **25.02.2013**

(51) Int Cl.:
*C22C 38/00* (2006.01)　　*C21D 9/52* (2006.01)
*C22C 38/18* (2006.01)　　*C22C 38/54* (2006.01)
*C22C 38/04* (2006.01)　　*C22C 38/20* (2006.01)
*C22C 38/22* (2006.01)　　*C22C 38/24* (2006.01)
*C22C 38/26* (2006.01)　　*C21D 1/84* (2006.01)
*C21D 6/00* (2006.01)　　*C21D 9/02* (2006.01)
*C22C 38/34* (2006.01)

(86) International application number:
**PCT/JP2013/054773**

(87) International publication number:
**WO 2013/133070 (12.09.2013 Gazette 2013/37)**

(54) **STEEL WIRE ROD WITH EXCELLENT SPRING WORKABILITY FOR HIGH-STRENGTH SPRING, PROCESS FOR MANUFACTURING SAME, AND HIGH-STRENGTH SPRING**

STAHLWALZDRAHT MIT HERVORRAGENDER FEDERBEARBEITBARKEIT FÜR EINE HOCHFESTE FEDER, VERFAHREN ZUR HERSTELLUNG DAVON UND HOCHFESTE FEDER

TIGE DE FIL D'ACIER PRÉSENTANT UNE EXCELLENTE APTITUDE AU FAÇONNAGE EN RESSORT POUR UN RESSORT À RÉSISTANCE ÉLEVÉE, SON PROCÉDÉ DE FABRICATION, ET RESSORT À RÉSISTANCE ÉLEVÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.03.2012 JP 2012050912**

(43) Date of publication of application:
**14.01.2015 Bulletin 2015/03**

(73) Proprietor: **Kabushiki Kaisha Kobe Seiko Sho (Kobe Steel, Ltd.)**
**Kobe-Shi, Hyogo 651-8585 (JP)**

(72) Inventors:
• **OURA, Hiroshi**
**Kobe-shi**
**Hyogo 657-0863 (JP)**
• **YOSHIHARA, Nao**
**Kobe-shi**
**Hyogo 657-0863 (JP)**

(74) Representative: **Müller-Boré & Partner**
**Patentanwälte PartG mbB**
**Friedenheimer Brücke 21**
**80639 München (DE)**

(56) References cited:
| | |
|---|---|
| **EP-A1- 1 865 079** | **EP-A1- 1 990 436** |
| **WO-A1-2007/139234** | **WO-A1-2008/044859** |
| **WO-A1-2012/029812** | **JP-A- H11 199 977** |
| **JP-A- H11 315 349** | **JP-A- 2000 256 740** |
| **JP-A- 2002 180 199** | **JP-A- 2003 253 391** |
| **JP-A- 2004 137 597** | **JP-A- 2007 131 945** |
| **JP-A- 2007 231 347** | **JP-A- 2008 007 856** |
| **JP-A- 2009 068 030** | **JP-A- 2010 132 943** |
| **JP-A- 2010 222 604** | **JP-B2- 3 599 551** |
| **US-A1- 2006 048 864** | **US-A1- 2009 065 105** |
| **US-A1- 2009 277 545** | |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a steel wire rod for high-strength spring which is used for automobile valve springs and the like and has high workabilities (wire drawability, coiling characteristics, and further, SV characteristics which will be described later), to a process for manufacturing the same, and to a high-strength spring (hard drawn wire, and oil temper spring) or the like which is obtained from this steel wire rod for high-strength spring.

BACKGROUND ART

Among springs used for vehicles, valve springs mainly used for engines are known. In the manufacture of these valve springs, a wire rod treated by wire drawing processing is subjected to oil temper treatment (hereinafter also called "OT treatment") and then to quenching-tempering treatment to improve spring characteristics, followed by processing (coiling) into a spring form. Main factors reducing production efficiency in such a spring manufacturing process include wire breakage during wire drawing processing and disconnection (breakage) of a wire during coiling after the wire drawing processing. Because these manufacturing troubles are accompanied by long-term shutdown of equipment, they bring about a remarkable reduction in production efficiency.

Then, many improved technologies concerning, for example, the structure of rolled material, wire drawing pretreatment, and wire drawing lubricants have been proposed as technologies for restraining wire breakage in wire drawing processing. Further, various techniques have been proposed concerning the reduction of wire breakage during coiling (hereinafter also referred to as "coiling breakage") to improve coiling characteristics.

Technologies used to improve coiling characteristics are proposed in, for example, Patent Document 1 in which scratches on the surface of a wire rod is reduced to reduce surface roughness by surface-treating the wire rod prior to OT treatment (that is, after wire drawing) and by allowing a surface scale to remain in the manufacture of a wire rod in the OT treatment, whereby the surface roughness of the oil-tempered wire rod is reduced to improve coiling characteristics. However, when cracks occur on the surface of the wire rod, these cracks cannot be removed even if the surface roughness is controlled, and these cracks cause coiling breakage, leading to deteriorated coiling characteristics.

Further, in Patent Document 2, coiling characteristics are improved by reducing undissolved carbides through the control of nitrogen in a heat-treated wire. However, the reduction in the amount of undissolved carbides is limited in restraining coiling breakages with handling scratches and cracks as the starting point though this is effective to improve the toughness and processability of the structure.

Meanwhile, in the manufacture of a valve spring, a shaving step (hereinafter also referred to as "SV step") is performed in which a wire material is processed into a round-shaped wire having a predetermined wire diameter by hot rolling and wound into a coil form to cool, followed by annealing at about 700°C to soften, thereby eliminating decarburized portions of the surface layer. In this case, the wire rod is required to also have better workability in this SV step (hereinafter also referred to as "SV characteristics").

As technologies that improve the SV characteristics, for example, Patent Document 3 proposes technologies that reduce the hardness of a rolled material by winding a wire rod so closely that the ring pitch is reduced to 1/10 or less of the ring diameter when winding like a coil and by slow-cooling after finish rolling, to make it possible to carry out the SV step without any treatment after the wire material is rolled. In this method, coarsening of crystal grains during slow-cooling progresses, which also increases the dispersion of crystal grains, resulting in deteriorated processability though the hardness of the structure is reduced, and therefore these technologies are not suitable as those for processing high-strength spring steel. Further, in these technologies, decarburization during slow-cooling is increased and the quality of a spring as a product is therefore deteriorated.

PRIOR ART DOCUMENT

PATENT DOCUMENT

Patent Document 1: JP 2009-235523 A
Patent Document 2: WO/2007/114491
Patent Document 3: JP 5-7912 A

US2009/0065105 discloses discloses a hot-rolled wire rod excellent in wire drawability or use in production of a suspension spring with average grain size Dc of a central part of the spring steel wire rod Dc<80$\mu$m obtained by adequately

controlling hot rolling conditions and cooling conditions after the hot rolling respectively with a two-step cooling process in order to enhance the pearlitic phase.

SUMMARY OF THE INVENTION

PROBLEMS TO BE SOLVED BY THE INVENTION

The present invention was made to solve these problems in prior art and it is an object of the present invention to provide a steel wire rod for high-strength spring exhibiting good performances with respect to all of the wire drawability, coiling characteristics, and SV characteristics in the manufacture of a spring, a useful process for manufacturing such a steel wire rod for high-strength spring, and a high-strength spring obtained using such a steel wire rod for high-strength spring as a base material.

MEANS FOR SOLVING THE PROBLEMS

A steel wire rod for high-strength spring according to the present invention which can solve the above problems is a steel wire rod obtained after hot rolling, the steel wire rod consisting of C: 0.4 to 0.8% (expressed in percentage by mass, hereinafter this applies to chemical component compositions), Si: 1.5 to 3.5%, Mn: 0.3 to 1.5%, Cr: 0.03 to 0.4%, and Al: 0.005% or less (not including 0%), and optionally one or more types selected from the group consisting of V 0.5% or less, Nb 0.5% or less , Ni 2.0% or less, Mo 0.5% or less and Cu 0.7% or less and B 0.01 or less, the balance consisting of iron and inevitable impurities, having a structure with a pearlite area ratio of 90% or more, and meeting the requirements of the following formulae (1) and (2):

$$8.0 \leq Pave \leq 12.0 \qquad (1)$$

$$0.0 < P\sigma \leq 0.5 \qquad (2)$$

wherein Pave is an average of grain size numbers of pearlite nodules at a depth of 0.5 mm from the surface (hereinafter also referred to as "pearlite nodule grain size number" or "pearlite nodule size") and $P\sigma$ is a standard deviation.

In the manufacture of the steel wire rod for high-strength spring as mentioned above, the steel wire rod obtained after hot rolling is wound into a coil form at a mounting temperature of 750 to 1000°C and then cooled rapidly and uniformly to 750°C or less at a rate of 1°C/sec or more on a cooling conveyer, wherein the starting temperature of slow-cooling continued subsequently may be designed to be in a range from 650 to 750°C in both the dense part and sparse part of the coil and a temperature difference between the dense part and sparse part of the coil may be designed to be 50°C or less.

In the above method of the present invention, the cooling rate V defined by the following formula (3) is preferably designed to be less than 1°C/sec in the above slow-cooling zone. Further, the staying time t required to allow the steel wire rod to pass through the slow-cooling zone is designed to be 50 sec or more:

$$V \ (°C/sec) = (Tin - Tout)/t \qquad (3)$$

wherein Tin is the temperature (°C) of the steel wire rod at the inlet of the slow-cooling zone, Tout is the temperature (°C) of the steel wire rod at the outlet of the slow-cooling zone, and t is the staying time (sec) of the steel wire rod in the slow-cooling zone.

The present invention includes a high-strength spring obtained from the steel wire rod for high-strength spring as mentioned above.

EFFECT OF THE INVENTION

In the present invention, the chemical component composition is adequately controlled and the manufacturing condition is appropriately controlled to thereby make the wire rod have a structure mainly constituted of pearlite. Further, the wire rod is made to meet the requirements of the formulae of the average Pave of pearlite nodule grain size number and its standard deviation Pσ. Therefore, a steel wire rod for high-strength spring exhibiting good performances with respect to all of the wire drawability, coiling characteristics, and SV characteristics in the manufacture of a spring can be attained and such a steel wire rod for high-strength spring is useful as a base material used to manufacture a high-strength spring.

BRIEF DESCRIPTION OF THE DRAWINGS

Fig. 1 is an explanatory view thematically showing the condition of a coil on a cooling conveyer;
Fig. 2 is a view for explaining a method for taking a sample for evaluation;
Fig. 3 is a graph showing the relation between the standard deviation Pσ of pearlite nodule grain size number and coiling characteristics.

MODE FOR CARRYING OUT THE INVENTION

The inventors of the present invention made detailed study concerning the cause of coiling breakage. As a result, it was found that many coiling breakages were generated with microcracks existing on the surface of a wire rod as the starting point and these microcracks arose during wire drawing prior to OT treatment. Further, it was also found that many microcracks as mentioned above were also caused when the wire rod passed through a straightening roller installed in the wire drawing process and that crack depth was increased when the wire rod passed through the straightening roller.

In order to restrain microcracks generated on the surface of the wire rod during wire drawing or when the wire rod passes through a straightening roller, it is also considered important to improve the factors such as die schedule, wire drawing speed, wire rod temperature during wire drawing which are technologies improving wire drawability. The inventors of the present invention made studies and, as a result, found that, separately from these factors, the dispersion of pearlite nodule size on the surface of the wire rod largely affected the occurrence of microcracks.

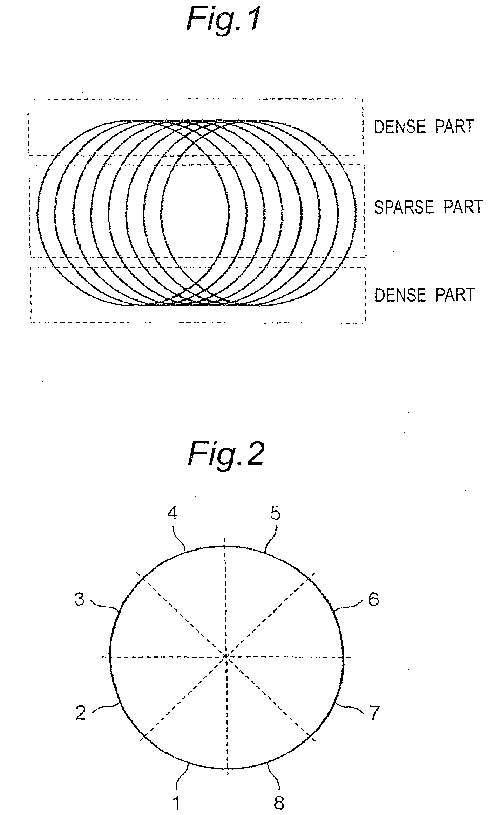

Generally, in the manufacture of a steel wire rod for spring, a steel wire rod obtained after hot rolling is wound into a coil-like form, placed on a cooling conveyer, and cooled by air cooling or the like to cool the coil. The state of the coil on the cooling conveyer is shown in Fig. 1 (schematic explanatory view). When the coil is cooled in such a state, it is considered that the cooling in such a condition gives rise to a difference between the cooling rate in a part where steel wire rods are stacked relatively densely (this part is called "dense part") and that in a part where steel wire rods are stacked relatively sparsely (this part is called "sparse part") and this causes a difference in the structure of the cooled steel wire rod, which has an adverse influence on spring workability.

The inventors of the present invention examined the relation between the structure of a rolled steel material of high-strength spring and spring workabilities (wire drawability, coiling characteristics, and SV characteristics) in detail. As a result, the inventors found that when the structure of the rolled material is controlled to have a fine and uniform pearlitic structure, the occurrence of microcracks in wire drawing processing is limited (namely, wire drawability is also improved), with the result that coiling characteristics and SV characteristics were also improved. Here, with regard to the dispersion of grain size of the structure, it is important to reduce the dispersion of the structure in a longitudinal direction because the dispersion in the longitudinal direction, that is, the dispersion caused by the dense part/ sparse part of the coil is larger than the dispersion in the section of the wire rod, and an influence on spring workability is also large.

The inventors of the present invention made further studies concerning the condition fulfilling the requirements. As a result, the inventors of the present invention found that a steel wire rod for high-strength spring that served the above purpose could be attained if the wire rod was made to have a pearlitic structure and the steel wire rod was designed to meet the requirements of the following formulae (1) and (2) wherein Pave is an average of pearlite nodule grain size numbers at a depth of 0.5 mm from the surface and Pσ is a standard deviation thereof, to complete the present invention:

$$8.0 \leq \text{Pave} \leq 12.0 \qquad (1)$$

$$0.0 < \text{P}\sigma \leq 0.5 \qquad (2)$$

In this case, the average Pave of pearlite nodule grain size number and its standard deviation Pσ are preferably those shown by the following formulae: $8.5 \leq \text{Pave} \leq 11.5$ and $0.0 < \text{P}\sigma \leq 0.4$. Further, the pearlitic structure means a structure containing 90 area% or more of perlite and the object of the present invention is attained even if pro-eutectoid ferrite, upper bainite, and the like are partly contained.

In a valve spring manufacturing process, for example, patenting treatment and softening/annealing treatment in IH (Induction Heating) equipment are performed before wire drawing treatment to remove work hardening layer caused by shaving processing (SV processing) and to obtain a structure superior in wire drawability. In the case of performing these treatments, the control of the structure in rolling processing (hot rolling wire rod) is a remarkably important requirement to restrain microcracks during wire drawing because the average Pave of pearlite nodule grain size numbers and its standard deviation Pσ on the surface of the wire rod do not almost change. Further, SV characteristics are also improved in a wire rod satisfying the above requirement.

In the manufacture of the steel wire rod for high-strength spring as mentioned above, it is also necessary to adequately control its manufacturing condition. The steel wire rod for high-strength spring is manufactured in the following procedures. First, a steel billet having a predetermined chemical component composition is processed into a form having a desired wire diameter by hot rolling. The rolling is preferably carried out at a temperature as low as possible from the viewpoint of structural micronization though no particular limitation is imposed on the heating temperature in the rolling processing. However, when the processing temperature is lowered, the deformation resistance of a steel material increases, leading to increased system load and therefore, the temperature is designed appropriately corresponding to a system to be operated. The heating temperature (heating temperature of a steel billet) in heat rolling is generally about 950 to 1000°C.

In succession, the steel wire rod obtained after heat rolling is placed in a coil state on a cooling conveyer. If the temperature (mounting temperature) of the wire rod at this time exceeds 1000°C, the structure is coarsened and if the temperature is less than 750°C, deformation resistance is increased, giving rise to product form failure. Therefore, the mounting temperature is designed to be 750 to 1000°C. This mounting temperature is preferably 775°C or more and 950°C or less.

After the coil is mounted on the cooling conveyer, it is cooled to a temperature range where pearlite transformation starts and then slowly cooled. With regard to a temperature range where the pearlite transformation starts, coarsening of pearlite nodule size is so promoted that the drawing rate (reduction of area) of a rolled material is extremely deteriorated if the temperature is too high whereas a supercooling phenomenon occurs and therefore bainite and martensite tend to be partly produced if the temperature is too low. This is the reason why the pearlite transformation start temperature was designed to be in a range of 650°C or more and 750°C or less (preferably in a range of 670°C or more and 730°C or less).

It is necessary that the wire rod stuck coil-wise prior to wire drawing be cooled rapidly and uniformly to keep the average Pave of pearlite nodule size and its standard deviation Pσ of the structure within predetermined range under control after the wire rod is rolled. Specifically, the dense part and sparse part of the coil are respectively cooled at a cooling rate of 1°C/sec or more and the temperature of the wire rod at the start of slow-cooling is so controlled that the temperatures of the dense part and sparse part are each in a range from 650°C to 750°C and a difference in temperature between the dense part and sparse part is 50°C or less. When the difference in temperature between the dense part and sparse part is 50°C or less in the temperature range where pearlite transformation starts, the standard deviation Pσ of pearlite nodule size can be remarkably improved. When the slow-cooling starts, the zone is usually covered with a slow-cooling cover prior to the cooling. Therefore, hereinafter, the slow-cooling zone is also called "within the slow-cooling cover" and the slow-cooling start position is also called "slow-cooling cover inlet".

With regard to the cooling speed at the dense part and sparse part of the coil until the rolled wire rod reaches the slow-cooling cover inlet since the rolled wire rod is placed on the conveyer, the temperature difference between the coil dense part and sparse part at the slow-cooling zone inlet can be reduced by adjustments of the amounts of air supplied from cooling blowers to the coil dense part and sparse part respectively. The cooling temperature difference to be recommended is 1.0°C/sec or less and preferably 0.5°C/sec or less. Because cooling rates at the coil dense part and sparse part vary according to rolling wire speed, conveyer speed, and the like, it is necessary to design the amount of air according to each rolling condition.

Then, the wire rod is slowly cooled within the slow-cooling cover to carry out transformation. The cooling rate V in the slow-cooling cover is defined by the following formula (3). This cooling rate V is preferably designed to be less than 1°C/sec. In this case, the requirement that the cooling rate V within the slow-cooling cover must satisfy the formula (3) is applied to all parts (including the dense part and sparse part) of the coil.

$$V \ (°C \ / \ sec) = (Tin - Tout)/t \qquad (3)$$

wherein Tin: temperature (°C) of the steel wire rod at the inlet of the slow-cooling zone; Tout: temperature (°C) of the steel wire rod at the outlet of the slow-cooling zone; and t is the staying time (sec) of the steel wire rod in the slow-cooling zone.

The installment of the aforementioned slow-cooling cover is useful to reduce the dispersion of temperature of the wire rod and to prevent a local structural dispersion. However, if the staying time within the slow-cooling cover (staying time in the slow-cooling zone, slow-cooling time) is too short, there is a fear that the slow-cooling is finished before the transformation is completed and supercooled structures such as bainite and martensite are produced by the subsequent cooling (generally, water cooling) and it is therefore preferable to secure 50 sec or more as the above staying time. Further, in a preferred embodiment of the present invention, a heater, an induction heater, or the like is installed to more promote slow cooling.

With regard to the chemical component composition of the steel wire rod for high-strength spring of the present invention, it is necessary to adequately control the chemical component composition to develop the characteristics specific to a final product (high-strength spring). The reason why the range of each component (element) in the chemical component composition is limited is as follows.

[C: 0.4 to 0.8%]

C is an element effective to improve strength and fatigue resistance and it is necessary to contain 0.4% or more of C. Though the strength and fatigue resistance of the spring are improved with increase in the amount of C, ductility and toughness are deteriorated if C is excessive and therefore, it is necessary that the amount of C be 0.8% or less. The lower limit of C content is preferably 0.5% or more and the upper limit of C content is preferably 0.7% or less.

[Si: 1.5 to 3.5%]

Si is an element necessary to carry out deoxidation of steel and also, solid-solutes in ferrite to produce the effect of heightening the strength of ferrite. It is necessary to contain 1.5% or more of Si to produce these effects. However, when the content of Si is excessive, ductility and toughness are deteriorated and also, decarburization on the surface is increased, which brings about low fatigue characteristics. Therefore, it is necessary that the amount of Si be 3.5% or less. The lower limit of Si content is preferably 1.7% or more (more preferably 1.8% or more) and the upper limit of Si content is preferably 3.0% or less (more preferably 2.5% or less).

[Mn: 0.3 to 1.5%]

Mn is also an element necessary to carry out deoxidation of steel and also, improves hardenability to contribute to improvement of spring strength. It is necessary to contain 0.3% or more of Si to produce these effects. However, when the content of Mn is excessive, the transformation time is increased, which makes it difficult to control the structure during hot rolling. It is therefore necessary that the amount of Mn be 1.5% or less. The lower limit of Mn content is preferably 0.35% or more (more preferably 0.40% or more) and the upper limit of Mn content is preferably 1.4% or less (more preferably 1.3% or less).

[Cr: 0.03 to 0.4%]

Cr causes secondary precipitation hardening in quenching and tempering treatment and in stress relief annealing after coiling to improve spring strength. It is necessary to contain 0.03% or more of Cr to produce this effect. However, if the content of Cr is excessive, the ductility and toughness are reduced, leading to deteriorated coiling characteristics and it is therefore necessary that the content of Cr be 0.4% or less and preferably 0.35% or less (more preferably 0.30% or less). The lower limit of Cr content is preferably 0.05% and more preferably 0.10% to produce the above effect.

[Al: 0.005% or less]

Though Al is a deoxidizing element, it forms inclusions such as $Al_2O_3$ and AlN in steel. These inclusions significantly decrease the fatigue life of a spring and it is therefore necessary to reduce Al to the minimum. From this point of view, it is necessary that the content of Al be 0.005% or less and more preferably 0.004% or less (not including 0%).

The basic components in the steel wire rod for high-strength spring according to the present invention are those mentioned above and the remainder is iron and unavoidable impurities (for example, P and S). The steel wire rod for high-strength spring of the present invention, as required, further contains one or more types selected from the group V: 0.5% or less, Nb: 0.5% or less, Ni: 2.0% or less, and Mo: 0.5% or less, Cu: 0.7% or less, and B: 0.01% or less. The characteristics of the steel wire rod are more improved corresponding to the types of elements to be contained. The reason of the preferable ranges of these elements is as follows.

[One or more types selected from the group consisting of V: 0.5% or less, Nb: 0.5% or less, Ni: 2.0% or less and Mo: 0.5% or less] V, Nb, Ni, and Mo each have the effect of improving the ductility and toughness of a spring and wire rod and this effect is produced by containing one or more types of these elements in a predetermined amount.

Among these elements, V acts to micronize crystal grains in hot rolling and quenching/tempering treatment and also has the effect of increasing the processability of the rolled wire rod and improving the ductility and toughness of the spring. Further, it causes secondary precipitation hardening in stress relief annealing after forming a spring to contribute to the improvement of spring strength. However, if V is excessively contained, large carbides and nitrides are generated when casting a steel material, leading to the increase of fatigue breakage with these inclusions as the starting point. For this, the content of V is preferably 0.5% or less and the upper limit of the content of V is more preferably 0.45% or less (even more preferably 0.40% or less). The lower limit of the content of V is preferably 0.05% or more and more preferably 0.06% or more (even more preferably 0.07% or more) to produce the above effect efficiently.

Nb also acts to micronize crystal grains in hot rolling and quenching/ tempering treatment and also has the effect of increasing the processability of the rolled wire rod and improving the ductility and toughness of the spring. However, even if Nb is contained excessively, its effect is saturated and this rather exerts an adverse influence on steel material cost. For this, the content of Nb is preferably 0.5% or less and the upper limit of the content of Nb is more preferably 0.45% or less (even more preferably 0.40% or less). The lower limit of the content of Nb is preferably 0.05% or more and more preferably 0.06% or more (even more preferably 0.07% or more) to produce the above effect efficiently.

Ni has the effect of improving ductility and toughness after quenching/tempering treatment. Further, Ni improves corrosion resistance. However, when Ni is excessively contained, hardenability is increased, which increases transformation time, making it difficult to control the structure in hot rolling. For this, the content of Ni is preferably 2.0% or less and the upper limit of the content of Ni is more preferably 1.9% or less (even more preferably 1.8% or less). The lower limit of the content of Ni is preferably 0.05% or more and more preferably 0.10% or more (even more preferably 0.15% or more) to produce the above effect efficiently.

Mo has the effect of improving ductility and toughness after quenching/ tempering treatment. Mo also improves hardenability to contribute to the increase of the strength of the spring. However, if Mo is contained excessively, the hardenability is increased, which makes it difficult to control the structure and also increases steel material cost. For this, the content of Mo is preferably 0.5% or less and the upper limit of the content of Mo is more preferably 0.45% or less (even more preferably 0.40% or less). The lower limit of the content of Mo is preferably 0.05% or more and more preferably 0.10% or more (even more preferably 0.15% or more) to produce the above effect efficiently.

[Cu: 0.7% or less (not including 0%)]

Cu has the effect of restraining decarburization. Cu also contributes to the improvement of corrosion resistance. However, if Cu is contained excessively, there is a danger that this causes deteriorated hot ductility and generation of cracks during hot rolling and therefore, the content of Cu is preferably 0.7% or less. The lower limit of the content of Cu is preferably 0.05% or more whereas the upper limit of the content of Cu is preferably 0.6% or less when Cu is contained.

[B: 0.01% or less (not including 0%)]

B acts to improve ductility and toughness. However, if B is contained excessively, complex compounds of Fe and B are precipitated, giving rise to cracks during hot rolling and therefore, the content of B is preferably 0.01% or less and more preferably 0.0080% or less (even more preferably 0.0060% or less). When B is contained, the lower limit of the content of B is 0.001% or more and more preferably 0.0015% or more (more preferably 0.0020% or more).

The steel wire rod for high-strength spring of the present invention is assumed to be one obtained after hot rolling. This steel wire rod for high-strength spring is then subjected to spring-processing to form a high-strength spring, whereby a spring having good characteristics is obtained.

EXAMPLES

The present invention will be explained in more detail by way of examples. However, the present invention is not originally limited by these examples and may be embodied by properly modifying within the scope complying with the spirit described above and below and these modifications are all embraced in the technical scope of the present invention.

Example 1

Steel ingots having chemical component compositions shown in Tables 1 and 2 were each melt-produced in a converter and then, each steel ingot was bloomed to manufacture a steel billet having a section of 155 mm × 155 mm. The steel billet was heated to 1000°C and then, processed (hot-rolled) into a round wire having a wire diameter of 5.0 to 8.0 mmφ. Then, each round wire was used to manufacture a coil (Test Nos. 1 to 31) having an individual weight of 2 ton in the manufacturing conditions shown in the following Tables 3 and 4 to examine the structure, mechanical properties, spring workabilities (wire drawability, coiling characteristics, SV characteristics) of each coil. The cooling rate shown in Tables 3 and 4 were controlled by controlling the conveyer speed.

[Table 1]

[Table 1]

| Steel type | Chemical component composition * (% By mass) | | | | | | | | | | |
|---|---|---|---|---|---|---|---|---|---|---|---|
| | C | Si | Mn | Ni | Cr | V | Cu | Mo | Nb | Al | B |
| A | 0.66 | 2.53 | 1.48 | - | 0.10 | - | - | - | - | 0.005 | - |
| B | 0.70 | 2.22 | 1.13 | - | 0.07 | - | 0.21 | - | - | 0.002 | - |
| C | 0.58 | 1.53 | 1.13 | - | 0.39 | - | - | - | - | 0.001 | 0.0033 |
| D | 0.48 | 1.95 | 0.45 | 0.28 | 0.27 | 0.17 | - | - | - | 0.005 | - |
| E | 0.44 | 3.11 | 0.95 | 0.71 | 0.33 | 0.25 | 0.18 | - | - | 0.003 | - |
| F | 0.78 | 1.74 | 1.31 | - | 0.19 | 0.33 | - | - | 0.21 | 0.003 | - |
| G | 0.58 | 2.20 | 0.70 | 0.26 | 0.21 | 0.31 | - | 0.22 | - | 0.002 | - |
| H | 0.71 | 2.58 | 0.82 | - | 0.38 | - | - | 0.41 | - | 0.004 | - |
| I | 0.76 | 3.31 | 1.43 | 0.51 | 0.15 | - | - | - | 0.44 | 0.001 | - |
| J | 0.61 | 1.85 | 1.38 | 1.77 | 0.26 | - | 0.28 | - | - | 0.003 | - |
| K | 0.53 | 2.59 | 1.00 | - | 0.22 | - | - | 0.35 | - | 0.003 | - |
| L | 0.41 | 2.03 | 0.71 | 1.12 | 0.34 | 0.41 | 0.33 | - | - | 0.002 | 0.0054 |
| *Balance: iron and inevitable impurities | | | | | | | | | | | |

[Table 2]

[Table 2]

| Steel type | Chemical component composition* (% By mass) | | | | | | | | | | |
|---|---|---|---|---|---|---|---|---|---|---|---|
| | C | Si | Mn | Ni | Cr | V | Cu | Mo | Nb | Al | B |
| A1 | 0.66 | 2.53 | 1.20 | - | 0.10 | - | - | - | - | 0.003 | - |
| A2 | 0.66 | 2.53 | 1.20 | - | 0.10 | - | - | - | - | 0.002 | - |
| C1 | 0.58 | 1.53 | 1.13 | - | 0.39 | - | - | - | - | 0.001 | 0.0033 |
| E1 | 0.44 | 3.11 | 0.95 | 0.71 | 0.33 | 0.25 | 0.18 | - | - | 0.005 | - |
| G1 | 0.58 | 2.20 | 0.70 | 0.26 | 0.21 | 0.31 | - | 0.22 | - | 0.002 | - |
| J1 | 0.61 | 1.85 | 1.38 | 1.77 | 0.26 | - | 0.28 | - | - | 0.001 | - |
| J2 | 0.61 | 1.85 | 1.38 | 1.77 | 0.26 | - | 0.28 | - | - | 0.003 | - |
| J3 | 0.61 | 1.85 | 1.38 | 1.77 | 0.26 | - | 0.28 | - | - | 0.003 | - |
| M | 1.03 | 2.01 | 0.88 | - | 0.06 | 0.16 | - | - | - | 0.003 | 0.0022 |
| N | 0.55 | 3.81 | 1.16 | 0.22 | 0.14 | - | - | 0.21 | - | 0.002 | - |
| O | 0.61 | 1.89 | 1.99 | - | 0.33 | - | 0.33 | - | 0.41 | 0.004 | 0.0041 |
| P | 0.67 | 2.38 | 1.18 | 2.19 | 0.24 | - | - | - | - | 0.003 | - |
| Q | 0.71 | 1.88 | 0.92 | - | 0.71 | 0.13 | 0.51 | - | - | 0.002 | 0.0028 |
| R | 0.53 | 1.93 | 1.00 | - | 0.17 | 0.65 | - | 0.22 | 0.11 | 0.003 | - |
| S | 0.54 | 1.79 | 0.61 | - | 0.29 | - | 0.98 | - | - | 0.003 | - |

(continued)

| Steel type | Chemical component composition* (% By mass) | | | | | | | | | | |
|---|---|---|---|---|---|---|---|---|---|---|---|
| | C | Si | Mn | Ni | Cr | V | Cu | Mo | Nb | Al | B |
| T | 0.77 | 2.51 | 1.00 | - | 0.31 | - | - | 0.66 | - | 0.003 | 0.0031 |
| U | 0.61 | 1.99 | 0.89 | 0.51 | 0.22 | - | 0.28 | - | 0.73 | 0.005 | - |
| V | 0.66 | 1.58 | 0.88 | 0.21 | 0.09 | - | 0.21 | - | - | 0.033 | - |
| W | 0.48 | 2.16 | 1.00 | - | 0.35 | - | - | - | - | 0.002 | 0.1330 |
| *Balance: iron and inevitable impurities | | | | | | | | | | | |

[Table 3]

[Table 3]

| Test No. | Steel type | Rolled wire diameter (mm) | Mounting temperature after rolling (°C) | Conveyer | | Temperature difference between the dense part and non-densepart (°C) | Cooling rate (°C) | | | | Slow-cooling time within slow-cooling cover (sec) |
|---|---|---|---|---|---|---|---|---|---|---|---|
| | | | | Slow-cooling cover inlet temperature (°C) | | | Mounting position- slow cooling cover inlet | | Within slow cooling cover | | |
| | | | | coil dense part | Coil sparse part | | Coil dense part | Coil sparse part | Coil dense part | Coil sparse part | |
| 1 | A | 8.0 | 910 | 710 | 700 | 10 | 3.0 | 3.5 | 0.6 | 0.7 | 210 |
| 2 | B | 7.0 | 920 | 700 | 660 | 40 | 2.5 | 3.0 | 0.5 | 0.6 | 280 |
| 3 | C | 7.0 | 770 | 720 | 700 | 20 | 1.5 | 2.0 | 0.5 | 0.5 | 240 |
| 4 | D | 7.0 | 810 | 740 | 710 | 30 | 2.5 | 3.5 | 0.8 | 0.8 | 190 |
| 5 | E | 6.4 | 950 | 710 | 670 | 40 | 2.5 | 3.0 | 0.7 | 0.7 | 180 |
| 6 | F | 5.0 | 910 | 710 | 670 | 40 | 4.0 | 5.0 | 0.5 | 0.6 | 290 |
| 7 | G | 7.0 | 750 | 700 | 680 | 20 | 1.5 | 2.0 | 0.4 | 0.5 | 240 |
| 8 | H | 7.0 | 850 | 730 | 710 | 20 | 2.5 | 3.0 | 0.5 | 0.5 | 320 |
| 9 | I | 6.4 | 920 | 720 | 720 | 0 | 3.0 | 3.0 | 0.6 | 0.6 | 210 |
| 10 | J | 8.0 | 770 | 690 | 660 | 30 | 2.0 | 3.0 | 0.5 | 0.6 | 240 |
| 11 | K | 5.0 | 780 | 660 | 660 | 0 | 2.5 | 2.5 | 0.2 | 0.3 | 320 |
| 12 | L | 7.0 | 880 | 740 | 720 | 20 | 4.0 | 4.5 | 0.6 | 0.7 | 240 |

[Table 4]

[Table 4]

| Test No. | steel type | Rolled wire diameter (mm) | Mounting temperature after rolling (°C) | ConVeyer | | | Cooling rate (°C) | | | | Slow-cooling time within slow-cooling cover (sec) |
|---|---|---|---|---|---|---|---|---|---|---|---|
| | | | | Slow-cooling cover inlet temperature (°C) | | Temperature difference between the dense part and non-densepart (°C) | Mounting position-slow cooling cover inlet | | Within slow cooling cover | | |
| | | | | Coil dense part | Coil non-dense part | | Coil dense part | Coil sparse part | Coil dense part | Coil sparse part | |
| 13 | A1 | 6.4 | 1050 | 740 | 700 | 40 | 3.5 | 4.0 | 0.8 | 0.7 | 280 |
| 14 | A2 | 6.4 | 910 | 780 | 750 | 30 | 2.0 | 2.5 | 0.7 | 0.8 | 280 |
| 15 | C1 | 6.4 | 930 | 670 | 630 | 40 | 4.0 | 4.5 | 0.6 | 0.7 | 280 |
| 16 | E1 | 5.5 | 770 | 720 | 680 | 40 | 0.5 | 1.0 | 0.8 | 0.9 | 210 |
| 17 | G1 | 7.0 | 810 | 740 | 670 | 70 | 2.0 | 4.0 | 0.6 | 0.7 | 240 |
| 18 | J1 | 6.4 | 790 | 730 | 660 | 70 | 2.0 | 4.5 | 0.8 | 0.7 | 190 |
| 19 | J2 | 6.4 | 780 | 670 | 650 | 20 | 4.0 | 4.5 | 1.1 | 1.3 | 190 |
| 20 | J3 | 6.4 | 800 | 700 | 670 | 30 | 3.5 | 4.5 | 0.6 | 0.7 | 40 |
| 21 | M | 8.0 | 890 | 690 | 660 | 30 | 3.0 | 3.5 | 0.5 | 0.6 | 210 |
| 22 | N | 6.4 | 940 | 720 | 680 | 40 | 2.5 | 3.0 | 0.5 | 0.6 | 280 |
| 23 | O | 7.0 | 880 | 740 | 740 | 0 | 4.0 | 4.0 | 0.6 | 0.7 | 240 |
| 24 | P | 7.0 | 920 | 680 | 680 | 0 | 2.5 | 2.5 | 0.6 | 0.7 | 180 |
| 25 | Q | 6.4 | 940 | 680 | 680 | 0 | 3.0 | 3.0 | 0.4 | 0.5 | 280 |
| 26 | R | 7.0 | 930 | 710 | 670 | 40 | 4.5 | 5.5 | 0.4 | 0.5 | 320 |
| 27 | S | 7.0 | 890 | 730 | 690 | 40 | 2.5 | 3.0 | 0.6 | 0.7 | 210 |
| 28 | T | 8.0 | 790 | 700 | 660 | 40 | 2.5 | 3.5 | 0.5 | 0.5 | 240 |
| 29 | U | 7.0 | 900 | 740 | 700 | 40 | 2.5 | 3.0 | 0.7 | 0.7 | 210 |
| 30 | V | 7.0 | 880 | 680 | 650 | 30 | 3.0 | 3.5 | 0.5 | 0.6 | 210 |
| 31 | W | 7.0 | 880 | 740 | 720 | 20 | 4.0 | 4.5 | 0.6 | 0.7 | 240 |

12

In the evaluation of mechanical characteristics, one ring was cut down from the terminal of a non-defective product of each coil and divided into eight parts (corresponding to eight-division in the longitudinal direction of the wire rod) in a circumferential direction as shown in Fig. 2 to form samples. Each sample was straightened and subjected to a tensile test to measure maximum tensile strength TS and drawing rate (reduction of area) RA of the sample. In each test, the measurement was made once (n = 1) for each sample to find an average (average of eight positions).

In the evaluation of the structure, each sectional structure of eight divided samples was observed by an optical microscope to calculate the pearlite area ratio, average Pave of pearlite nodule size (P nodule size), and standard deviation $P\sigma$ of the sample. The pearlite nodule means an area where ferrite crystal grains in a pearlite structure have the same azimuth.

With regard to the pearlite area ratio, each sample obtained at the positions of the surface layer (four-visual field), D/4 (four-visual field), and D/2 (one-visual field) (D is a diameter of the wire rod) on the transverse section of the hot-rolled wire rod was embedded in a resin or the like and ground. After the sample was chemically corroded using a picric acid, four places at which the azimuths of crystal grains form an angle of 90 degrees with each other were observed to take its structural photograph in an area of 200 $\mu$m $\times$ 200 $\mu$m at a magnification of 400. Each obtained image was binarized by using an image analysis soft ("Image Pro Plus", manufactured by Media Cybemetics Co., Ltd.) and then, the pearlite area ratio was found to calculate an average. When a decarburized layer existed on the surface layer, "all decarburized parts" defined in JIS G 0558-4 were excluded from the measurement sites. Then, a structure in which the pearlite area ratio was 90% or more was represented by "P" and a structure in which the pearlite area ratio was less than 90% and bainite and martensite were produced was represented by "P + B" or "P + B + M".

In the measurement of the P nodule size, the transverse section of a hot rolled wire rod was embedded in a resin or the like, ground, corroded using a solution of concentrated nitric acid (62%) : alcohol = 1 : 100 (ratio by volume), and then observed by an optical microscope. The measurement of the P nodule size is made according to "Measurement of Austenite Crystal Grain" described in JIS G 0551 to measure the grain size number. Even if the sample has a mixed phase structure of ferrite and pearlite, a pro-eutectoid ferrite grain can be distinguished by the same corrosion and therefore, the P nodule size can be measured by excluding the area of the pro-eutectoid ferrite grains if the ferrite area ratio is 40% or less. The grain size number of P-nodule at a depth of 0.5 mm from the surface of each section was measured and its average was defined as the grain size number Pi (i = 1 to 8) at the sectional surface area and further, an average Pave of P1 to P8 and its standard deviation $P\sigma$ were calculated.

Among the spring workabilities, wire drawability was evaluated in the following manner: the coil after SV process was annealed in the condition of 600°C $\times$ 3 hr, then washed with an acid, subjected to bonderizing treatment, then drawn until the reduction of area reached 85% by a single block wire-drawing machine to find whether or not wire breakage during wire drawing was observed. A sample which was not broken was evaluated as a coil superior in wire drawability ($\bigcirc$) whereas a sample which was broken was evaluated as a coil inferior in wire drawability (x).

The coiling characteristics were evaluated by the number of breakages (number of breakages in self-diameter winding) when the wire rod after wire drawing was wound by self-diameter winding with 1000 turns. A broken fracture surface was observed, and a sample which was not broken with microcracks as the starting point was evaluated as a coil superior in coiling characteristics and a sample which was broken with microcracks as the starting point was evaluated as a coil inferior in coiling characteristics (the number of breakages shown in the following Tables 5 and 6 is one with microcracks as the starting point).

The SV characteristics were evaluated in the following manner: shaving processing (SV processing) was performed without heat-treating the coil to observe whether or not wire breakage was observed in this SV process. A sample which was not broken was evaluated as a coil superior in SV characteristics ($\bigcirc$) whereas a sample which was broken was evaluated as a coil inferior in SV characteristics ($\times$).

The results of these evaluations are shown together with the structure of rolled material in the following Tables 5 and 6.

[Table 5]

[Table 5]

| Test No. | Steel type | Rolling material structure** | | | | Rolled material Maximum tensile strength TS (MPa) | Rolled material Reduction of area (RA%) | wire drawability | Coiling charactaristics (the number of breakages) | SV characteristics |
|---|---|---|---|---|---|---|---|---|---|---|
| | | Coil dense part | Coil sparse part | P nodule size | | | | | | |
| | | | | Pave | Pσ | | | | | |
| 1 | A | P | P | 9.0 | 0.3 | 1161 | 41 | ○ | 0 | ○ |
| 2 | B | P | P | 9.5 | 0.3 | 1121 | 47 | ○ | 0 | ○ |
| 3 | C | P | P | 11.5 | 0.2 | 1115 | 45 | ○ | 0 | ○ |
| 4 | D | P | P | 10.5 | 0.2 | 1158 | 45 | ○ | 0 | ○ |
| 5 | E | P | P | 9.0 | 0.3 | 1178 | 44 | ○ | 0 | ○ |
| 6 | F | P | P | 9.0 | 0.2 | 1211 | 43 | ○ | 0 | ○ |
| 7 | G | P | P | 11.5 | 0.3 | 1191 | 41 | ○ | 0 | ○ |
| 8 | H | P | P | 10.5 | 0.4 | 1140 | 43 | ○ | 0 | ○ |
| 9 | I | P | P | 10.5 | 0.1 | 1184 | 44 | ○ | 0 | ○ |
| 10 | J | P | P | 11.0 | 0.2 | 1109 | 48 | ○ | 0 | ○ |
| 11 | K | P | P | 11.0 | 0.1 | 1164 | 38 | ○ | 0 | ○ |
| 12 | L | P | P | 10.5 | 0.2 | 1185 | 41 | ○ | 0 | ○ |

**: P: pearlite

[Table 6]

[Table 6]

| Test No. | Steel type | Rolling material structure** | | | | Rolled material Maximum tensile strength TS (MPa) | Rolled material Reduction of area (RA%) | Wire drawability | Coiling characteristics (the number of breakages) | SV characteristics |
| --- | --- | --- | --- | --- | --- | --- | --- | --- | --- | --- |
| | | Coil dense part | Coil sparse part | P nodule size | | | | | | |
| | | | | Pave | Pc | | | | | |
| 13 | A1 | P | P | 7.0 | 0.3 | 1160 | 35 | × | 5 | ○ |
| 14 | A2 | P | P | 7.5 | 0.3 | 1231 | 29 | × | - | ○ |
| 15 | C1 | P+B | P+B | 9.5 | 0.3 | 1138 | 53 | × | - | × |
| 16 | E1 | P | P | 7.5 | 0.5 | 1192 | 32 | × | 5 | ○ |
| 17 | G1 | P | P | 10.5 | 0.6 | 1182 | 42 | ○ | 2 | ○ |
| 18 | J1 | P | P | 11.0 | 0.7 | 1101 | 39 | ○ | 7 | ○ |
| 19 | J2 | P+B | P+B | 10.5 | 0.3 | 1168 | 43 | × | - | × |
| 20 | J3 | P+B+M | P+B+M | 11.0 | 0.3 | 1138 | 53 | × | - | × |
| 21 | M | P | P | 9.5 | 0.3 | 1188 | 39 | × | 8 | ○ |
| 22 | N | P | P | 9.5 | 0.3 | 1164 | 41 | × | 15 | ○ |
| 23 | O | P+B+M | P+B+M | 10.0 | 0.4 | 1110 | 52 | × | - | × |
| 24 | P | P+B | P+B | 9.0 | 0.2 | 1135 | 51 | × | - | × |
| 25 | Q | P | P | 9.5 | 0.3 | 1194 | 49 | × | 5 | ○ |
| 26 | R | P | P | 9.5 | 0.1 | 1252 | 32 | × | 3 | ○ |
| 27 | S | P | P | 9.5 | 0.1 | 1076 | 48 | × | 5 | ○ |
| 28 | T | P+B+M | P+B+M | 11.0 | 0.2 | 1231 | 38 | × | - | × |
| 29 | U | P+B | P+B | 9.5 | 0.2 | 1108 | 47 | × | - | × |
| 30 | V | P | P | 10.0 | 0.2 | 1088 | 51 | ○ | 7 | ○ |
| 31 | W | P | P | 10.5 | 0.3 | 1171 | 41 | × | - | × |
| **: P: pearlite, B: bainite, M: martensite | | | | | | | | | | |

Test Samples Nos. 1 to 12 in Table 5 are examples fulfilling the requirements defined in the present invention, Test Samples Nos. 13 to 20 shown in Table 6 are examples which each has a chemical component composition fulfilling the range defined in the present invention (steel types A1, A2, C1, E1, G1, J1 to J3) but each has a manufacturing condition out of the range defined in the present invention. Test Samples Nos. 21 to 31 which are examples each having a chemical component composition out of the range defined in the present invention (steel types M to W).

From these results, it is considered as follows. First, Test Numbers Nos. 1 to 12 each have a fine pearlite structure having a P nodule satisfying the requirements defined in the above formulae (1) and (2) and therefore, these steel wire rods each obtain good results in all of the wire drawability, coiling characteristics and SV characteristics.

With regard to Test No. 13, crystal grains grow before the wire rod reaches the slow-cooling zone (slow-cooling cover inlet) and the P nodule size of the rolled material is also coarsened, bringing about deteriorated wire drawability and coiling characteristics because the mounting temperature after rolling is high. With regard to Test No. 14, the temperature of the coil dense part at the slow-cooling cover inlet is high because cooling after the coil is placed is insufficient, and therefore, crystal grains grow within the slow-cooling cover and the P nodule size of the rolled material is also coarsened, resulting in deteriorated wire drawability.

With regard to Test No. 15, the cooling after the coil was mounted is excessive and therefore, bainite is partially produced at the slow-cooling cover inlet and wire breakage occurs in the SV process because the temperature of the coil sparse part at the slow-cooling cover inlet is low. With regard to Test No. 16, the cooling rate after the coil is mounted is low, so that crystal grains grow before the slow-cooling cover inlet and therefore, the P nodule size of the rolled material is coarsened, resulting in impaired wire drawability and coiling characteristics.

With regard to Test Nos. 17 and 18, the cooling rates of the coil dense part and coil sparse part from the mounted position to the slow-cooling cover inlet are controlled so insufficiently that the difference between the cooling rates at the dense part and sparse part is as large as 2.0 °C/sec or 2.5 °C/sec. Accordingly, the temperature difference between the dense part and sparse part at the slow-cooling cover inlet is increased to 70°C which is out of the range defined in the present invention and therefore, the standard deviation P$\sigma$ of the P nodule size is increased, bringing about impaired coiling characteristics.

With regard to Test No. 19, a pearlite single-phase structure is not produced but bainite is produced and wire breakage is caused in the SV process because of high cooling rate within the slow-cooling cover. With regard to Test No. 20, a pearlite single-phase structure is not produced but bainite and martensite are produced and wire breakage is caused in the SV process because the slow-cooling time within the slow-cooling cover is short.

With regard to Test Nos. 21, 22, and 25 to 27, they are examples using steel types (steel types M, N, Q, R, S in Table 2) in which the content of each component (C, Si, Cr, V, Cu) is excessive and the wire drawability and coiling characteristics are impaired.

With regard to Test Nos. 23, 24, 28, 29, and 31, they are examples using steel types (steel types O, P, T, U, W in Table 2) in which the content of each component (Mn, Ni, Mo, Nb, B) is excessive, so that the hardenability is improved, and therefore, a pearlite single phase is not produced but bainite and martensite are produced, causing wire breakage in the SV process.

With regard to Test No. 30, this is an example using a steel type (steel type V in Table 2) having an excessive Al content and therefore, inclusions such as AlN are produced, so that coiling wire breakage is caused with these inclusions as the starting point, leading to impaired coiling characteristics.

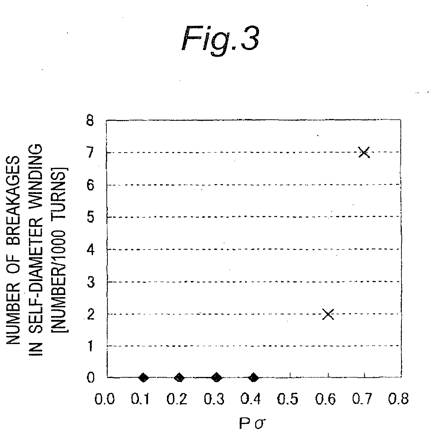

The relation between the standard deviation P$\sigma$ of the P nodule size and the number of breakages in self-diameter winding based on these results is shown in Fig. 3. In this Fig. 3, "♦" means that a sample has good coiling characteristics and "x" means that a sample has inferior coiling characteristics. As is clear from this result, it is understood that a spring steel wire material superior in coiling characteristics is obtained by controlling the standard deviation P$\sigma$ of the P nodule size that it satisfies a predetermined relation formula.

## Claims

1. A steel wire rod with excellent spring workability for high-strength spring, the steel wire rod being a steel wire rod obtained after hot rolling and consisting of, mass%: C: 0.4 to 0.8%, Si: 1.5 to 3.5%, Mn: 0.3 to 1.5%, Cr: 0.03 to 0.4%, and Al: 0.005% or less (not including 0%), and optionally one or more types selected from the group: V: 0.5% or less, Nb: 0.5% or less, Ni: 2.0% or less, and Mo: 0.5% or less, Cu: 0.7% or less, and B: 0.01% or less with the balance consisting of iron and inevitable impurities, having a structure with a pearlite area ratio of 90% or more, and meeting the requirements of the following formulae (1) and (2):

$$8.0 \leq Pave \leq 12.0 \qquad (1)$$

$$0.0 < P\sigma \leq 0.5 \qquad (2)$$

wherein Pave is an average of the grain size numbers of pearlite nodules at a depth of 0.5 mm from the surface and P$\sigma$ is its standard deviation.

2. A process for manufacturing the steel wire rod for high-strength spring according to claim 1, the method comprising winding the steel wire rod obtained after hot rolling into a coil form at a mounting temperature of 750 to 1000°C and then cooling rapidly and uniformly to 750°C or less at a rate of 1°C/sec or more on a cooling conveyer, wherein the starting temperature of slow-cooling continued subsequently is in a range from 650 to 750°C both in a dense part and in a sparse part of the coil and a temperature difference between the dense part and sparse part of the coil is 50°C or less; and

the cooling rate V defined by the following formula (3) is less than 1°C/sec in the slow-cooling zone:

$$V\ (°C/sec) = (Tin - Tout)/t \qquad (3)$$

wherein Tin is the temperature (°C) of the steel wire rod at the inlet of the slow-cooling zone, Tout is the temperature (°C) of the steel wire rod at the outlet of the slow-cooling zone, and t is the staying time (sec) of the steel wire rod in the slow-cooling zone.

3. The method according to claim 2, wherein the staying time t required to allow the steel wire rod to pass through the slow-cooling zone is 50 sec or more.

4. A high-strength spring obtained from the steel wire rod for high-strength spring according to claim 1.

**Patentansprüche**

1. Stahlwalzdraht mit hervorragender Federbearbeitbarkeit für eine hochfeste Feder, wobei der Stahlwalzdraht ein Stahlwalzdraht ist, der nach dem Warmwalzen erhalten ist und besteht aus, Masse-%:

C: 0,4 bis 0,8%, Si: 1,5 bis 3,5%, Mn: 0,3 bis 1,5%, Cr: 0,03 bis 0,4% und Al: 0,005% oder weniger (0% nicht eingeschlossen), und gegebenenfalls eine oder mehrere Arten, ausgewählt aus der Gruppe:
V: 0,5% oder weniger, Nb: 0,5% oder weniger, Ni: 2,0% oder weniger und Mo: 0,5% oder weniger, Cu: 0,7% oder weniger, und B: 0,01% oder weniger, wobei der Rest aus Eisen und unvermeidbaren Verunreinigungen besteht, der eine Struktur mit einem Perlitflächenverhältnis von 90% oder mehr aufweist und die Bedingungen der folgenden Formeln (1) und (2) genügt:

$$8,0 \leq Pave \leq 12,0 \qquad (1)$$

$$0,0 < P\sigma \leq 0,5 \qquad (2)$$

wobei Pave ein Mittel der Korngrößenzahl von Perlitknötchen bei einer Tiefe von 0,5 mm von der Oberfläche ist und P$\sigma$ dessen Standardabweichung ist.

2. Verfahren zur Herstellung des Stahlwalzdrahtes für eine hochfeste Feder nach Anspruch 1, wobei das Verfahren das Aufwickeln des Stahlwalzdrahtes, erhalten nach dem Warmwalzen, in eine Spulenform bei einer Montierungstemperatur von 750 bis 1000°C und dann das schnelle und einheitliche Abkühlen auf 750°C oder weniger bei einer Rate von 1 °C/sek oder mehr auf einem Kühlfördergerät umfasst, wobei die Starttemperatur des nachfolgend weitergeführten langsamen Abkühlens in einem Bereich von 650 bis 750°C sowohl in einem dichten Teil als auch in einem spärlichen Teil der Spule liegt und ein Temperaturunterschied zwischen dem dichten Teil und dem spärlichen Teil der Spule 50°C oder weniger beträgt; und die Kühlrate V, definiert durch die folgende Formel (3), weniger als 1°C/sek in der langsamen Abkühlzone beträgt:

$$V\ (°C/sek) = (Tin - Tout)/t\ \ (3)$$

wobei Tin die Temperatur (°C) des Stahlwalzdrahtes bei dem Eintritt in die langsame Abkühlzone ist, Tout die Temperatur (°C) des Stahlwalzdrahtes bei dem Austritt aus der langsamen Abkühlzone ist und t die Verweilzeit (sek) des Stahlwalzdrahtes in der langsamen Abkühlzone ist.

**3.** Verfahren nach Anspruch 2, wobei die Verweilzeit t, die benötigt wird, um dem Stahlwalzdraht das Durchqueren der langsamen Abkühlzone zu ermöglichen, 50 sek oder mehr beträgt.

**4.** Hochfeste Feder, erhalten aus dem Stahlwalzdraht für eine hochfeste Feder nach Anspruch 1.

**Revendications**

**1.** Tige de fil d'acier présentant une excellente aptitude au façonnage en ressort pour un ressort à résistance élevée, la tige de fil d'acier étant une tige de fil d'acier obtenue après laminage à chaud et constituée de, en % en masse : C : 0,4 à 0,8 %, Si : 1, 5 à 3,5 %, Mn : 0,3 à 1,5 %, Cr : 0,03 à 0,4 %, et Al : 0,005 % ou moins (en dehors de 0 %), et optionnellement un ou plusieurs types sélectionné(s) dans le groupe suivant : V : 0,5 % ou moins, Nb : 0,5 % ou moins, Ni : 2,0 % ou moins, et Mo : 0,5 % ou moins, Cu : 0,7 % ou moins et B : 0,01 % ou moins, le reste étant constitué par du fer et les inévitables impuretés, ayant une structure avec un rapport de surface de perlite supérieur ou égal à 90 %, et satisfaisant les exigences des formules (1) et (2) suivantes :

$$8,0 \leq \text{Pave} \leq 12,0 \quad (1)$$

$$0,0 < \text{P}\sigma \leq 0,5 \quad (2)$$

dans laquelle Pave est une moyenne des valeurs des grosseurs de grain des nodules de perlite à une profondeur de 0,5 mm à partir de la surface et Pσ est son écart-type.

**2.** Procédé de fabrication de la tige de fil d'acier pour un ressort à résistance élevée selon la revendication 1, le procédé comprenant l'enroulement de la tige de fil d'acier obtenue après laminage à chaud en une forme de bobine à une température de montage de 750 à 1 000° C puis le refroidissement rapide et uniforme à 750° C ou moins à une vitesse de 1° C/seconde ou plus sur un convoyeur de refroidissement, dans lequel
la température d'initiation d'un refroidissement lent poursuivi ultérieurement est dans une plage allant de 650 à 750° C à la fois dans une partie dense et dans une partie clairsemée de la bobine et un écart de température entre la partie dense et la partie clairsemée de la bobine est de 50° C ou moins ; et
la vitesse de refroidissement V définie par la formule (3) suivante est inférieure à 1° C/seconde dans la zone de refroidissement lent :

$$V\ (°C/s) = (Tin - Tout)/t \quad (3)$$

où Tin est la température (°C) de la tige de fil d'acier au niveau de l'entrée de la zone de refroidissement lent, Tout est la température (°C) de la tige de fil d'acier à la sortie de la zone de refroidissement lent, et t est le temps de repos (en secondes) de la tige de fil d'acier dans la zone de refroidissement lent.

**3.** Procédé selon la revendication 2, dans lequel le temps de repos t requis pour permettre à la tige de fil d'acier de passer à travers la zone de refroidissement lent est de 50 secondes ou plus.

**4.** Ressort à résistance élevée obtenu à partir de la tige de fil d'acier pour ressort à résistance élevée selon la revendication 1.

## Fig.1

DENSE PART

SPARSE PART

DENSE PART

## Fig.2

## Fig.3

**EP 2 824 205 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2009235523 A
- WO 2007114491 A
- JP 5007912 A
- US 20090065105 A